**Europäisches Patentamt**

**European Patent Office**

**Office européen des brevets**

(19)

(11) Numéro de publication: **0 123 591**

**A1**

(12) # DEMANDE DE BREVET EUROPEEN

(21) Numéro de dépôt: **84400660.1**

(22) Date de dépôt: **03.04.84**

(51) Int. Cl.³: **G 03 B 15/08**

(30) Priorité: **14.04.83 FR 8306130**

(43) Date de publication de la demande:
**31.10.84 Bulletin 84/44**

(84) Etats contractants désignés:
**AT BE CH DE GB IT LI LU NL SE**

(71) Demandeur: **IMAGES TRANSFERT FRANCE**
**29 Rue Duret**
**F-75116 Paris(FR)**

(72) Inventeur: **Bahi, Jean**
**19 Grande Rue**
**F-92310 Sevres(FR)**

(72) Inventeur: **Francois, Michel**
**4 rue du Bois de Boulogne**
**F-92210 St Cloud(FR)**

(74) Mandataire: **Bressand, Georges et al,**
**c/o CABINET LAVOIX 2 Place d'Estienne d'Orves**
**F-75441 Paris Cedex 09(FR)**

(54) **Procédé et banc-titre pour engendrer un mouvement relatif entre une caméra de prise de vues cinématographique et un objet à filmer.**

(57) Ce procédé consiste à engendrer un mouvement relatif entre une caméra de prise de vues cinématographique (1) et une table de travail (4) à mouvements croisés (X, Y) destinée à porter des moyens (7, 37) pour exposer le champ de la caméra, caractérisé en ce qu'il consiste à déterminer ledit mouvement relatif préalablement à la prise de vue de la séquence à filmer, par le relevé de valeurs de coordonnées d'une série de points d'une courbe (CM) sur une tablette à numériser (15) sur laquelle ladite courbe est tracée, à mémoriser toutes les valeurs de coordonnées dans une mémoire (14), et à assurer le déplacement relatif de la caméra (1) et de la table de travail (4) par extraction des valeurs mémorisées de ladite mémoire (14).

FIG.1

1                                    0123591

Procédé et banc-titre pour engendrer un mouvement
relatif entre une caméra de prise de vues
cinématographique et un objet à filmer.-

La présente invention est relative à un procédé pour l'obtention d'un film à partir de documents à image statique notamment pour la prise de vues de génériques de films.

On sait que l'on utilise pour la mise en oeuvre de tels procédés, des appareils appelés "banc-titre" qui comportent en général une table à mouvements croisés destinée à recevoir le document à filmer, table qui est déplaçable horizontalement en X et Y et au-dessus de laquelle est placée la caméra. Celle-ci est déplaçable verticalement (axe $Z$), son axe optique étant disposé perpendiculairement à la table recevant le document.

Pour obtenir une séquence filmée du document, par exemple pour faire un travelling avant ou arrière, d'une partie de l'image du document, l'opérateur place sur celui-ci un calque ou analogue et détermine sur celui-ci un ou plusieurs segments de droite correspondant au mouvement souhaité, tout en déterminant en même temps l'effet de zoom à exécuter selon l'axe $Z$ par la caméra. Grâce à un réticule projeté sur le document et centré sur l'axe de la caméra, l'opérateur par un déplacement manuel de la table, repère successivement le début ou la fin du segment d'où la machine déduit en X et Y les distances parcourues qu'elle mémorise. Puis, l'opérateur choisit le nombre de prises de vues pour la séquence considérée et la machine calcule les coordonnées des points auxquels la table doit s'arrêter pour une prise de vue, le calcul pouvant tenir compte d'un certain effet d'amorti en début et à la fin du mouvement. Ces données étant calculées, la machine peut procéder à la prise de vues de la séquence au cours de laquelle la table effectue donc automatiquement le mou-

2

vement correspondant aux segments choisis avec des arrêts consécutifs aux points déterminés par le calcul. Le mouvement de la caméra selon l'axe Z est déterminé de façon indépendante, mais de manière analogue.

En raison du fait que ce procédé connu opère à partir des distances parcourues en X et Y par la table, entre le début et la fin d'un segment de droite, tout mouvement qui s'écarte de la droite est sans signification, seuls les points extrêmes de la courbe du tracé étant pris en compte. Pour effectuer des mouvements curviligne l'opérateur doit procéder manuellement image par image ce qui est particulièrement laborieux.

L'invention a pour but de fournir un procédé et un appareil du type décrit ci-dessus permettant de filmer entièrement automatiquement des séquences dont les images sont choisies selon un tracé dont la forme peut être choisie à volonté par l'opérateur.

L'invention a donc pour objet un procédé pour engendrer un mouvement relatif entre une caméra de prise de vues cinématographique et une table de travail à mouvements croisés destinée à porter des moyens pour exposer le champ de la caméra, caractérisé en ce qu'il consiste à déterminer ledit mouvement relatif préalablement à la prise de vues de la séquence à filmer, par le relevé de valeurs des coordonnées d'une série de points d'une courbe sur une tablette à numériser sur laquelle ladite courbe est tracée, à mémoriser toutes les valeurs de coordonnées dans une mémoire, et à assurer le déplacement relatif de la caméra et de la table de travail par extraction des valeurs mémorisées de ladite mémoire.

Il résulte de ces caractéristiques que le mouvement relatif entre la caméra et la table de

3

travail peut être fait selon un tracé quelconque qui, lors de la prise de vues pourra être reproduit avec une fidélité qui ne dépend que de la résolution de la tablette à numériser d'une part et du positionnement de la table de travail vail et/ou de la caméra, d'autre part, la courbe choisie pouvant parfaitement s'écarter d'un segment de droite.

Selon un premier mode de mise en oeuvre du procédé suivant l'invention, dans le cas où le champ de la caméra est exposée à une source lumineuse prévue dans ladite table de travail, le procédé consiste à relever ladite courbe directement sur ladite tablette à numériser.

Grâce à cette caractéristique, l'invention permet, lorsque la séquence désirée est filmée, de dessiner un motif quelconque sur la pellicule pendant que la caméra est ouverte en permanence cette technique s'apparentant ainsi à celle du dessin animé.

Selon un autre mode de mise en oeuvre de l'invention, dans le cas où ladite table de travail supporte un document à image statique à partir duquel la séquence doit être filmée, le procédé consiste à tracer d'abord sur un support transparent superposé au document, la courbe représentant ledit mouvement par sélection des parties intéressées de l'image du document, puis à reporter ledit support sur la tablette à numériser et à relever lesdites valeurs de coordonnées en repassant sur la courbe tracée préalablement sur ledit support transparent.

Ce mode de mise en oeuvre permet ainsi avec une grande précision, d'exécuter des séquences filmées avec des mouvements de caméra tels que le travelling avant ou arrière, d'un sujet qui constitue l'image du document porté par la table de travail. Dans ces conditions, suivant une caractéristique particulière de

4

l'invention, on calcule la longueur de la courbe relevée, on divise cette longueur en autant de segments
que la séquence souhaitée comporte d'images et, lors
de la prise de vues,on restitue le mouvement relatif
en déplaçant  la table de travail et/ou la caméra
d'un segment à l'autre, tout en ouvrant la caméra par
intermittence à la même fréquence.

Suivant une autre caractéristique de l'invention, les valeurs représentant les coordonnées des
points de la courbe sont formées par les incréments
de distance affectés de leur signe, obtenus lors du
relevé de ladite courbe.

Il en résulte que les valeurs des coordonnées sont rapportées au premier point de la courbe
relevée et non pas à l'origine du système de coordonnées choisi.

Selon encore une autre caractéristique de
l'invention, le procédé consiste, dans le cas qui vient
d'être décrit, à ne mémoriser dans ladite mémoire,
que les incréments de coordonnées situées dans une plage délimitée par des valeurs maximales et minimales.

L'invention a également pour objet un banc-
titre destiné à la mise en oeuvre  du procédé tel que
défini ci-dessus.

D'autres caractéristiques de l'invention apparaîtront au cours de la description qui va suivre,
donnée uniquement à titre d'exemple et faite en se
référant aux dessins annexés sur lequels:

la Fig. 1 est un schéma d'un banc-titre dans
lequel est mis en oeuvre le procédé suivant l'invention;

la Fig. 2 représente schématiquement une vue
de face de la tablette à numériser servant au relevé
des coordonnées des points d'une courbe choisie pour
déterminer le mouvement relatif de la caméra par rapport à la table de travail;

la Fig. 3 est un organigramme mis en oeuvre dans le processeur-maître utilisé dans le circuit de commande du banc-titre;

la Fig. 4 est un organigramme de calcul des pas de déplacement relatif de la caméra par rapport à la table lorsqu'un document doit être filmé alors que l'obturateur de la caméra est ouvert par intermittence;

la Fig. 5 est un organigramme de calcul de vitesse mis en oeuvre pour le déplacement de là table lors de la prise de vue d'une séquence alors que l'obturateur de la caméra reste ouvert.

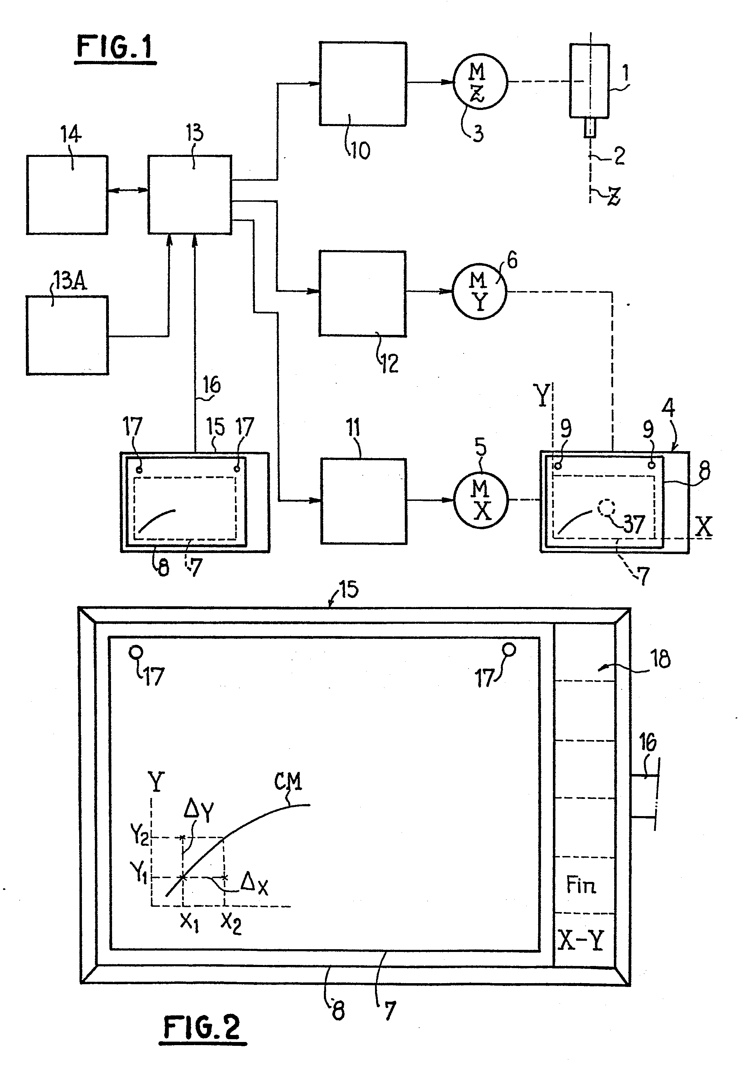

La Fig. 1 montre un exemple de réalisation d'un banc-titre dans lequel est mis en oeuvre le procédé suivant l'invention. De façon classique, le banc-titre comprend une caméra 1 montée sur une colonne verticale (non représentée), son axe optique 2 étant vertical et constituant l'axe $Z$ dans le système de coordonnées matérialisé par le banc-titre. La caméra 1 peut être déplacée le long de la colonne pour l'obtention des effets de zoom , par un dispositif d'entraînement animé par un moteur pas-à-pas 3.

Une table de travail 4 est placée en-dessous de la caméra, son plan défini par des axes X et Y du système de coordonnées étant horizontal. De façon conue, la table de travail 4 est déplaçable selon les axes X et Y dans le plan horizontal, chaque mouvement pouvant être assuré par un moteur pas-à-pas c'est-à-dire un moteur 5 de déplacement X et un moteur 6 de déplacement Y.

Sur la Fig. 1, on a symbolisé un document à filmer par le rectangle 7, ce document étant recouvert d'un papier calque 8 dont la position est fixée par rapport à la table 4 grâce à des picots

6

de positionnement 9 et de perforations correspondantes pratiquées dans ce calque. La Fig. 1 montre que l'opérateur vient de tracer une courbe de mouvement CM sur le papier calque pour manifester son intention de filmer le document pendant que le point d'intersection de l'axe 2 de la caméra 1 avec le plan de la table 4 suit la courbe CM, éventuellement avec l'effet de zoom souhaité. Les moteurs d'entraînement 3, 5 et 6 sont commandés chacun par un processeur-esclave (10, 11 et 12 respectivement) eux-mêmes pilotés par un processeur-maître 13 qui est associé à une mémoire 14 et à un clavier de commande 13A destiné à l'introduction des ordres de fonctionnement fournis par l'opérateur.

Le processeur-maître 13 est relié également à une tablette à numériser 15. Celle-ci est du type permettant par pointage d'un style à un endroit quelconque de sa surface d'engendrer des valeurs binaires de coordonnées X - Y par rapport à un origine $O$ qui peut être situé par exemple dans l'angle inférieur de la tablette ou à tour autre point de celle-ci.

Les valeurs binaires des coordonnées X et Y sont engendrées sur un bus de sortie 16 à raison de 16 bits par coordonnée, par exemple. La tablette fabriquée par la Société Summagraphics Corporation sous la référence ID série 2000 - Fairfield, Connecticut, E.U.A. convient particulièrement bien pour la mise en oeuvre de l'invention. Des picots 17 sont prévus pour le positionnement des calques lorsque l'on reporte une courbe tracée sur la table de travail 4 sur la tablette à numériser 15.

Il est à noter que la tablette à numériser du type décrit ci-dessus fournit une sortie numérique pour chaque coordonnées à une certaine fréquence d'échantillonnage qui, pour fixer les idées, peut être d'une prise d'échantillon par 0,01 seconde.

Une zone 18 de la tablette divisée en divers compartiments   , est destinée à l'enregistrement de certains ordres de fonctionnement tels que "début relevé courbe", "fin relevé courbe" etc.

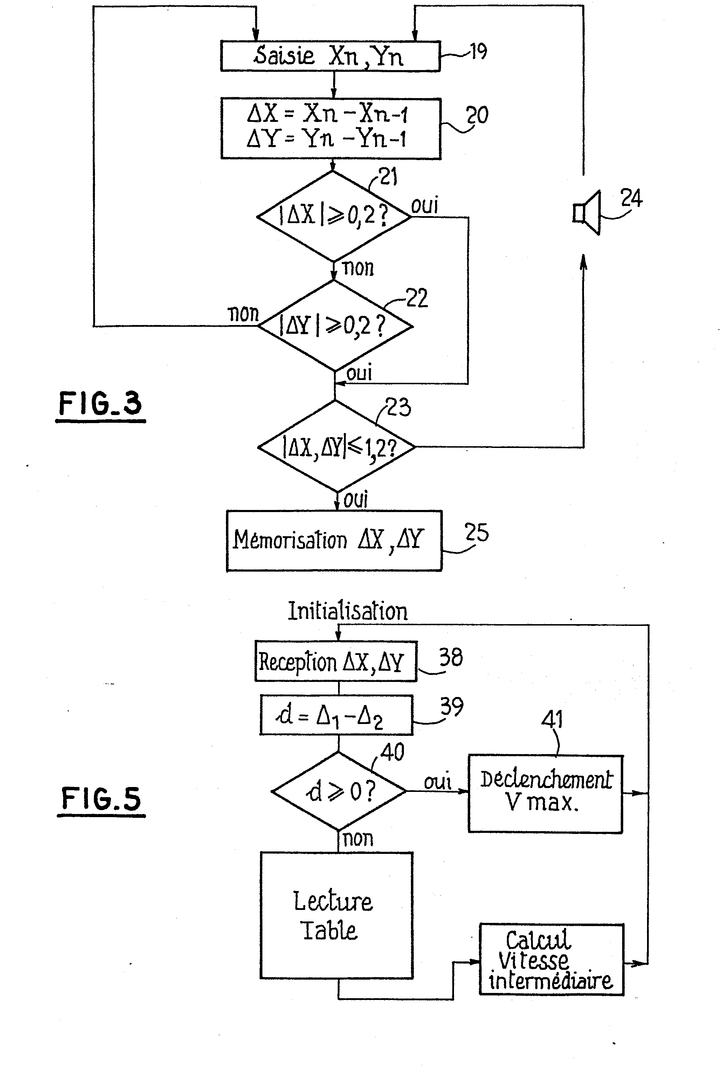

On va maintenant se référer à l'organigramme de la Fig. 3, mis en oeuvre dans le processeur-maître 13.

·On suppose que l'opératuer a placé le document 7 sur la table de travail 1, et a tracé une courbe qu'il souhaite faire suivre par le banc-titre au cours d'une séquence à filmer. Celle-ci consistera après un traitement (décrit ci-après) des données relatives à la courbe CM, à filmer le document 7 pendant que l'obturateur de la caméra est commandé par intermittence alors que la table de travail effectue des mouvements croisés saccadés selon les axes X et Y du systèmes de coordonnées en conformité avec la courbe CM souhaitée. Pour fixer les idées, si le document 7 est une photographie aérienne d'une rivière, on pourra filmer des images agrandies successives de son cours, la courbe CM étant dessinée de telle façon qu'elle suive celui-ci.

Pour relever la courbe CM, l'opérateur reporte le calque 8 sur la tablette à numériser 15 en l'accrochant sur les picots 17. Ensuite, il repasse avec un style le tracé exact de la courbe après avoir initialisé l'introduction des données à l'aide de l'un des rectangles de la zone 18 de la tablette.

Lorsque l'opérateur touche un point de la couche CM, la tablette 15 engendre une valeur binaire d'ordonnée Y et une valeur binaire d'abcisse X (opération 19, Fig.3).

Dès que l'échantillonnage suivant est effectué par la tablette, ces valeurs $X_n$ et $Y_n$ sont transférées dans le processeur-maître 13, qui les mémorise temporairement. Ce processeur calcule à partir de ces données récentes, les différences $\Delta X$ et $\Delta Y$ en ordonnée et en abcisse (opération 20) par rapport aux valeurs binaires $X_{n-1}$ et $Y_{n-1}$ précédemment relevées.

Il va de soi que la résolution dans l'obtention des valeurs X et Y ne peut être meilleure que l'unité de longueur élémentaire qui correspond à un incrément binaire des valeurs fournies par la tablette. Dans le cas de l'exemple, (qui n'est nullement limitatif), les valeurs binaires X et Y augmentent d'une unité chaque fois que le style franchit dans la direction correspondante une distance de 0,1 mm. Toutefois, cette distance est jugée trop faible pour être significative lors des déplacements ultérieurs de la table de travail 4 dont le positionnement ne peut être effectué qu'avec une précision dépassant 0,2 mm dans chaque direction.

C'est pourquoi, les opérations 21 et 22 de l'organigramme consistent à effectuer successivement les tests $\Delta X \geqslant 0,2$ mm? et $\Delta Y \geqslant 0,2$ mm? . Si les réponses à ces deux tests demeurent négatives c'est-à-dire que l'opérateur n'a pas encore déplacé son style sur des distances respectives suffisantes, l'organigramme passe de nouveau aux opérations 19 et 20 jusqu'à ce que les tests 21 et 22 soient affirmatifs. Il est à noter que ces tests sont exécutés séparément car il est possible que le style soit déplacé parallèlement à l'un ou l'autre axe du système de coordonnées.

Bien entendu, la limite inférieure de 0,2 mm à laquelle les valeurs $\Delta X$ et $\Delta Y$ doivent satisfaire n'est donnée ici qu'à titre d'exemple et ne s'impose en réalité qu'en raison des contraintes mécaniques attachées au banc-titre.

Les valeurs $\Delta$ X et $\Delta$ Y sont également soumises à un test en 23 qui vérifie si elles ne dépassent pas une valeur supérieure donnée (ici 1,2 mm choisi également à titre d'exemple).

Ce test est nécessaire essentiellement pour les deux raisons suivantes:

1) Il évite que des données soient engendrées lorsque l'opérateur repasse sur la courbe CM avec une vitesse supérieure à la vitesse d'acquisition des données par la tablette qui comme précédemment indiqué effectue un échantillonnage à une fréquence donnée. Sans le test en question, le relevé de la courbe risquerait de présenter des interruptions et la régularité des déplacements ultérieurs de la table de travail 4 en souffrirait.

2) Il permet des interruptions du retraçage de la courbe CM, par exemple lorsque l'opérateur est amené à passer temporairement à une autre occupation ou simplement s'il lève brièvement son style du calque 17.

Comme on peut le voir sur la Fig. 3, si les valeurs $\Delta$ X et $\Delta$ Y dépassent la limite imposée, le test étant négatif, un signal d'avertissement est engendré (sonore en 24, ou de toute autre nature) et le processeur-maître est mis en attente de nouvelles valeurs $X_n$ et $Y_n$ telles que $\Delta$ X et $\Delta$ Y soient suffisamment faibles. En d'autres termes, lors d'une interruption du retraçage, l'opérateur doit nécessairement pointer un emplacement de la tablette qui se trouve à l'intérieur d'un cercle dont le rayon ne dépasse pas la limite supérieure choisie.

Ce test étant effectué, les valeurs $\Delta$ X et $\Delta$ Y sont mémorisées lors de l'opération 25 dans la mémoire 14 qui lorsque la courbe a été enregistrée en totalité comporte un jeu de valeurs différentielles $\Delta$ X et $\Delta$ Y représentatives de la courbe CM, chaque couple de valeurs

10 ·

étant stocké par exemple à deux adresses contigües de la mémoire et chaque valeur occupant par exemple un octet de celle-ci. Un tel octet peut comporter une valeur numérique dans plusieurs des bits les moins significatifs ainsi qu'une valeur "1" ou "0" représentant le signe de la différence dans le bit le plus significatif.

Pour marquer la fin du traçage de la courbe, l'opérateur peut pointer sur une autre case de la zone 18 de la tablette 15.

Les données de la courbe CM étant ainsi mises en mémoire, le banc-titre est prêt à filmer la séquence souhaité. Pour ce faire, la table de travail 4 doit se déplacer par des mouvements croisés saccadés en conformité avec la couche CM, les déplacements étant effectués avec des pas en X et Y qui sont pris en compte dans chacun des processeurs-esclaves concernés 11 et 12. (On notera que l'on s'abstient de décrire le mouvement de la caméra selon l'axe $Z$ qui ne nécessite aucun calcul particulier).

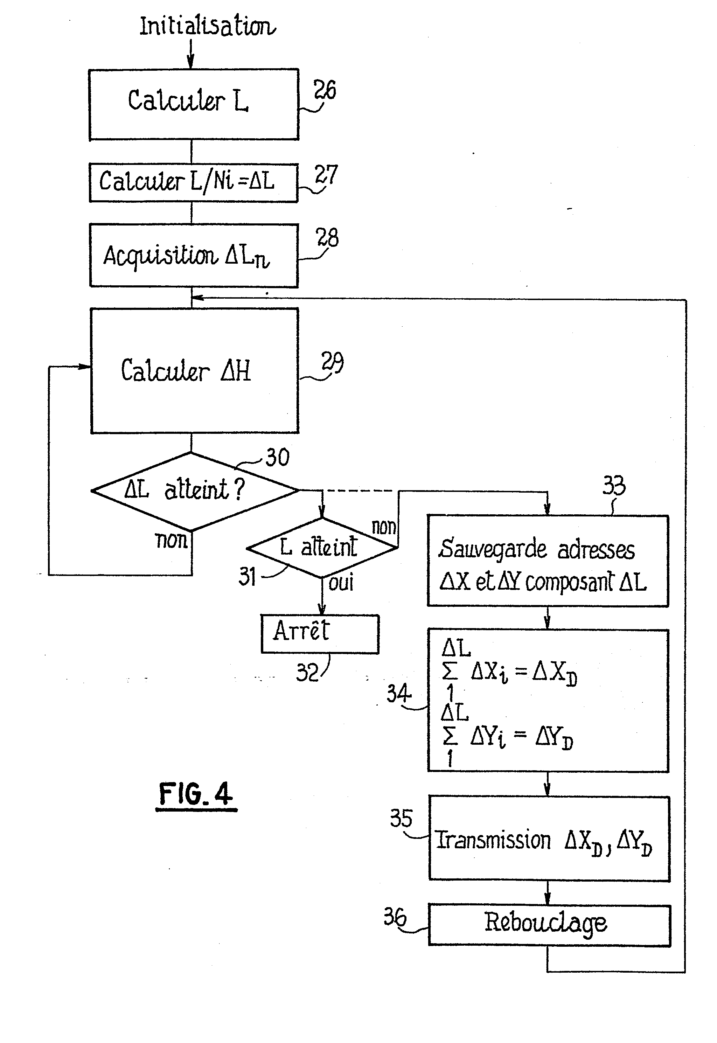

La Fig. 4 représente l'organigramme de calcul des pas de déplacement effectués dans chacun des processeurs-esclaves 11 et 12, avec l'assistance de la mémoire 14 et du processeur-maître 13.

L'opération 26 de cet organigramme consiste à calculer la longueur totale de la courbe CM. Ce calcul qui est effectué par le processeur-maître 13 consiste à déterminer d'abord les valeurs d'hypoténuse $\Delta H$ de chaque couple de valeurs $\Delta X$ et $\Delta Y$ puis a additionner toutes les valeurs $\Delta H$ ce qui permet d'obtenir la longueur totale L.

L'opérateur décide en combien d'images la séquence doit être filmée ou en d'autres termes avec combien de pas de déplacement les mouvements croisés de la table 4 doivent être effectués. Ce nombre $N_i$ est

11

introduit dans le processeur-maître 13 à l'aide du pupitre 13A, après quoi la processeur-maître effectue la division $L/N_i = \Delta L$, $\Delta L_n$ représentant la longueur d'un tronçon élémentaire donné de la couche CM à parcourir pendant un pas correspondant (opération 27).

L'opération 28 consiste à mémoriser toutes les valeurs $\Delta L$ à des adresses successives de la mémoire.

L'opération 29 consiste à reprendre un à un les calculs de toutes les valeurs de $\Delta H$ correspondant aux hypoténuses élémentaires des couples de valeurs $\Delta X$ et $\Delta Y$. Chaque valeur $\Delta H$ trouvée est additionnée à la précédente jusqu'à concurrence d'une valeur $\Delta L$ opération qui est effectuée par le test 30. Si la valeur $\Delta L$ n'est pas atteinte, un nouveau calcul de $\Delta H$ intervient en 29. Si la valeur $\Delta l$ est atteinte, on effectue un nouveau test en 31 pour examiner si la longueur totale L est atteinte. Si la réponse est affirmative le calcul se termine en 32. Dans le cas contraire, les adresses des valeurs $\Delta X$ et $\Delta Y$ qui ont composées la dernière valeur $\Delta L$ sont gardées en mémoire.

Ces adresses servent ensuites à déterminer les longueurs réelles de déplacement $\Delta X_D$ et $\Delta X_D$ à partir des sommes de valeurs successives de $\Delta X$ et $\Delta Y$ ayant composées la longueur $\Delta L$ en cours selon les expressions:

$$\Delta X_D = \sum_1^{\Delta L} \Delta X_i \quad \text{et}$$

$$\Delta X_D = \sum_1^{\Delta L} \Delta X_i$$

dans lesquelles $\Delta X_i$ et $\Delta Y_i$ représentent chaque fois les valeurs différentielles élémentaires trouvées jusqu'à ce que le test 30 reçoive une réponse affirmative.

Le processeur-maître transmet les valeurs $\Delta X_D$ et $\Delta Y_D$ aux processeurs-esclaves respectifs 11 et 12 et les moteurs pas-à-pas sont commandés en conséquence pendant qu'en 36 le processeur-maître reboucle l'organigramme sur l'opération 29 pour exécuter le calcul des valeurs $\Delta X_D$ et $\Delta Y_D$ suivantes. Les opérations que l'on vient de décrire sont repétées autant de fois que la séquence en cours d'exécution comporte d'images.

La commande des mouvements croisés saccadés de la table de travail peut être exécutée éventuellement avec un effet d'amorti en début et en fin de course par une programmation appropriée des longueurs élémentaires au début et à la fin de l'exécution du programme que l'on vient de décrire.

Bien entendu, dans tout le processus de calcul des pas de mouvement , le montage tient compte des signes des valeurs $\Delta X$ , $\Delta Y$.

On va maintenant décrire la Fig. 5 qui concerne la prise de vues pendant que la caméra reste ouverte. La pellicule dans celle-ci est alors exposée à une source lumineuse symbolisée par le cercle 37 sur la Fig. 1 placée dans la table de travail 4. Ce mode de fonctionnement permet ainsi de créer une série d'images représentant chacune un tronçon de la courbe souhaitée, ce qui lors de la projection du film donne l'impression que la courbe est dessinée au fur et à mesure.

On conçoit que pendant ce mode de fonctionnement des mouvements croisés doivent être exécutés à des vitesses propres telles que,quelque soit la différence entre eux, ils se terminent au même instant lorsque la courbe est achevée.

Pour assurer ce mode opératoire, les processeurs-esclaves 11et 12 peuvent exécuter chacun un programme dont l'organigramme simplifié apparaît sur la

13

Fig. 5

Après réception (opération 38) des valeurs $\Delta X_n$ et $\Delta Y_n$ instantanées en provenance de la mémoire 14, et élaborées par la programme illustré sur l·.Fig. 3, le processeur-esclave considéré établit la différence entre les valeurs différentielles successives. Pour la commodité de l'exposé, on appelera ces ·valeurs différentielles $\Delta_1$ et $\Delta_2$, étant entendu que lorsqu'il s'agit du.processeur-esclave 11 affecté au mouvement X, $\Delta_1$ représente la valeur $\Delta Y$ en cours et $\Delta_2$ la valeur $\Delta X$ tandis que pour le processeur-esclave 12 affecté au mouvement Y, $\Delta_1$ représente $\Delta X$ et $\Delta_2$ représente $\Delta Y$.

Le processeur-esclave considéré exécute alors un calcul $d = \Delta_1 - \Delta_2$ par l'opération 39 et le résultat est soumis à un test $d \geqslant 0$? en 40. Si le résultat est affirmatif, le mouvement correspondant de la table est exécuté à la vitesse maximale déterminée par construction (opération 41). Sinon, le processuer-esclave détermine à l'aide d'une table stockée dans sa mémoire une valeur de commande DL qui réduit de façon correspondante la vitesse du moteur 5 ou 6 associé à ce processeur, la table contenant pour tout les couples de valeurs $\Delta X$, $\Delta Y$ possibles, une valeur de durée particulière correspondante. Ces calculs étant exécutés simultanément par les deux processeurs-esclaves 11 et 12, les distances $\Delta X$ et $\Delta Y$ en cours seront exécutés dans le même intervalle de temps.

Il est a noter que le second mode opératoire que l'on vient de décrire peut également être exécuté avec des amortis en début et en fin des mouvements croisés de la table 4.

14

– REVENDICATIONS –

1. Procédé pour engendrer un mouvement relatif entre une caméra de prise de vues cinématographique (1) et une table de travail (4) à mouvements croisés (X,Y) destinée à porter des moyens (7,37) pour exposer le champ de la caméra, caractérisé en ce qu'il consiste à déterminer ledit mouvement relatif préalablement à la prise de vue de la séquence à filmer, par le relevé de valeurs de coordonnées d'une série de points d'une courbe (CM) sur une tablette à numériser (15) sur laquelle ladite courbe est tracée, à mémoriser toutes les valeurs de coordonnées dans une mémoire (14), et à assurer le déplacement relatif de la caméra (1) et de la table de travail (4) par extraction des valeurs mémorisées de ladite mémoire (14).

2. Procédé suivant la revendication 1, caractérisé en ce que dans le cas où le champ de la caméra (1) est exposée à une source lumineuse (37) prévue dans ladite table de travail (4), le procédé consiste à relever ladite courbe (CM) directement sur ladite tablette (15) à numériser.

3. Procédé suivant la revendication 1, caractérisé en ce que dans le cas où ladite table de travail (4) supporte un document (7) à image statique à partir duquel la séquence doit être filmée, le procédé consiste à tracer d'abord sur un support transparent (8) superposé au document (7) la courbe (CM) représentant ledit mouvement par sélection des parties intéressées de l'image du document, puis à reporter ledit support sur la tablette à numériser (15) et à relever lesdites valeurs de coordonnées en repassant sur la courbe tracée préalablement sur ledit support transparent (8).

4. Procédé suivant la revendication 3, caractérisé en ce qu'on calcule la longueur (L) de la courbe (CM) relevée, on divise cette longueur en autant de segments ($\Delta$ L) que la séquence souhaitée comporte d'images et, lors de la prise de vues, on restitue le mouvement relatif en déplaçant la table de travail (4) et/ou la caméra (1) d'un segment à l'autre, tant en ouvrant la caméra par intermittence à la même fréquence.

5. Procédé suivant l'une quelconque des revendications 1 à 4, caractérisé en ce que les valeurs représentant les coordonnées des points de la courbe (CM) sont formées par des incréments de distance ($\Delta X_n$ , $\Delta Y_n$) affectés de leur signe, obtenus lors du relevé de ladite courbe (CM).

6. Procédé suivant la revendication 5, caractérisé en ce qu'il consiste à ne mémoriser que des incréments ($\Delta$ X, $\Delta$ Y) dont la valeur absolue dépasse une valeur minimale prédéterminée.

7. Procédé suivant l'une quelconque des revendications 5 et 6, caractérisé en ce qu'il consiste à ne mémoriser que des incréments dont valeur absolue est inférieure ou égale à une limite prédéterminée.

8. Procédé suivant l'une quelconque des revendications 5 à 7 lorsqu'elles dépendent de la revendication 4 caractérisé en ce qu'il consiste à calculer la longueur de la courbe (CM) par la sommation de valeur d'hypoténuse ($\Delta$ H) de tous les couples de valeurs d'incréments ($\Delta X_n$ , $\Delta Y_n$) relevées.

9. Procédé suivant la revendication 8, caractérisé en ce qu'on compare chacun desdits segments ($\Delta$ L) résultant de la division de ladite longueur totale (L) par le nombre d'images à filmer ($N_i$), aux valeurs d'hypoténuse ($\Delta$ H) correspondantes et on établit la somme de ces valeurs d'hypoténuse ($\Delta$ H) ce dont il résultent les distances X et Y à parcourir par ladite table de travail (4) lors de la prise de vues, et on répète ces opérations jusqu'à ce que la totalité de la longueur de la courbe (CM) soit prise en compte.

10. Procédé suivant l'une quelconque des revendications 5 et 6 lorsqu'elles dépendent de la revendication 2, caractérisé en ce qu'il consiste à déterminer pour chaque couple de valeurs d'incréments relevées ($\Delta X_n$ , $\Delta Y_n$) une valeur de différence (d), à affecter cette valeur de différence à l'un et/ou l'autre des directions X et Y dudit système de coordonnées et à établir du signal de commande de vitesse de telle manière que les distances en X et Y soient parcourues en un temps identique par ladite table de travail pour un couple de valeurs d'incrément données ( $\Delta X_n$ , $\Delta Y_n$), et à répéter ces opérations pour tous les couples de valeurs relevées.

11. Banc-titre pour la mise en oeuvre du procédé suivant l'une quelconque des revendications précédentes comportant une caméra de prise de vues cinématographique (1), une table de travail (4) destinée à supporter des moyens (7,37) pour exposer le champ de ladite caméra (1), ladite table de travail comportant des moyens d'entraînement (5, 6, 11, 12) pour effectués des mouvements croisés (X et Y) et des moyens de commande capable de déterminer ces mouvements selon un trajet prédéterminé, caractérisé en ce que lesdits moyens de commande comprennent une tablette à numériser (15) destinée au relevé d'une courbe (CM) représentant ledit mouvement relatif et des moyens de calcul et de mémorisation, qui à partir des valeurs représentantles coordonnées des points de la courbe (CM) engendrent des signaux de commande pour lesdits moyens d'entraînement (5, 6, 11, 12).

## FIG.1

## FIG.2

0123591

**FIG.3**

**FIG.5**

0123591

Initialisation

Calculer L $\qquad$ 26

Calculer L/Ni =ΔL $\qquad$ 27

Acquisition $\Delta L_n$ $\qquad$ 28

Calculer ΔH $\qquad$ 29

ΔL atteint ? $\qquad$ 30

non

L atteint $\qquad$ 31

non

Arrêt $\qquad$ 32

oui

Sauvegarde adresses
ΔX et ΔY composant ΔL $\qquad$ 33

$$\sum_{1}^{\Delta L} \Delta X_i = \Delta X_D$$

$$\sum_{1}^{\Delta L} \Delta Y_i = \Delta Y_D$$

34

Transmission $\Delta X_D, \Delta Y_D$ $\qquad$ 35

Rebouclage $\qquad$ 36

**FIG. 4**

Office européen
des brevets

# RAPPORT DE RECHERCHE EUROPEENNE

EP  84 40 0660

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-4 214 823  (PRITCHARD) <br> * Colonne 2, lignes 7-21; colonne 2, ligne 65 jusqu'à colonne 3, ligne 8 * | 1 | G 03 B  15/08 |
| A | US-A-3 690 747  (VAUGHN) <br> * Revendication 1 * | 1 | |
| A | US-A-3 817 609  (VAUGHN) <br> * Revendication 1 * | 1 | |
| A | FR-A-2 417 792 <br> (MESSERSCHMITT-BOLKOW-BLOHM) <br> * Page 2, lignes 19-35 * | 1 | |
| A | FERNSEH- UND KINO-TECHNIK, vol. 36, no. 3, mars 1982, pages 106-108, Berlin, DE; "Computergesteuerter Ablauf von Trickfilm-Produktionen" <br> * Figure 1; page 107 * | 1 | DOMAINES TECHNIQUES RECHERCHES (Int. Cl. 3) <br><br> G 03 B  15/00 <br> G 03 B  15/08 <br> G 06 F  15/46 |
| A | FR-A-2 210 132  (GERBER GARMENT TECHNOLOGY) <br> * Revendication 1 * | | |

Le présent rapport de recherche a été établi pour toutes les revendications

| Lieu de la recherche <br> LA HAYE | Date d'achèvement de la recherche <br> 06-07-1984 | Examinateur <br> MEES G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503.03 82